# EUROPEAN PATENT SPECIFICATION

(11) **EP 3 909 668 B1**
(45) Date of publication and mention of the grant of the patent: **19.06.2024**
(21) Application number: 20737958.7
(22) Date of filing: 06.01.2020
(51) Int. Cl.: B01D 69/10, D04H 1/558

(54) **SEMI-PERMEABLE MEMBRANE SUPPORT AND METHOD FOR PRODUCING SEMI-PERMEABLE MEMBRANE SUPPORT**
TRÄGER FÜR SEMIPERMEABLE MEMBRAN UND VERFAHREN ZUR HERSTELLUNG EINES TRÄGERS FÜR SEMIPERMEABLE MEMBRAN
SUPPORT DE MEMBRANE SEMI-PERMÉABLE ET PROCÉDÉ DE FABRICATION D'UN SUPPORT DE MEMBRANE SEMI-PERMÉABLE

(30) Priority: 09.01.2019 JP 2019001609
(43) Date of publication of application: 17.11.2021
(73) Proprietor: Mitsubishi Paper Mills Limited, Tokyo 130-0026 (JP)
(72) Inventor: Ochiai, Takahito, Tokyo 130-0026 (JP); SHIMIZU, Yusuke, Tokyo 130-0026 (JP); MASUDA, Takao, Tokyo 130-0026 (JP)
(74) Representative: Kraus & Lederer PartGmbB
(86) International application number: PCT/JP2020/000065
(87) International publication number: WO 2020/145240

(56) References cited:
- WO-A1-2011/049231
- WO-A1-2013/129610
- WO-A1-2018/174224
- WO-A2-2005/009580
- JP-A- S56 126 407
- JP-A- 2013 188 712
- JP-A- 2013 220 382
- JP-A- 2015 058 411
- JP-A- 2016 159 197

## Description

### TECHNICAL FIELD

The present invention relates to a semipermeable membrane support and a method of producing the semipermeable membrane support.

### BACKGROUND ART

A semipermeable membrane is widely used in the field of ultrapure water production for medical purposes typified by the desalination of sea water, water purifiers, food concentration, wastewater treatment and hemofiltration and for cleaning semiconductors. The separation function layer of a semipermeable membrane is made of a porous resin such as cellulose-based resin, polysulfone-based resin, polyacrylonitrile-based resin, fluorine-based resin or polyester-based resin. However, since these porous resins have low mechanical strength when used alone, a "filtration membrane" which is a composite comprising a semipermeable membrane on one side of a semipermeable membrane support composed of a fiber substrate such as nonwoven fabric or woven fabric is used. In the semipermeable membrane support, a surface on which a semipermeable membrane is to be formed is referred to as "coating surface" and a surface on which the semipermeable membrane is not to be formed is referred to as "noncoating surface".

For a "filtration membrane" which comprises a semipermeable membrane formed on a semipermeable membrane support, a method in which a synthetic resin such as the above-mentioned polysulfone-based resin is dissolved in an organic solvent to prepare a semipermeable membrane solution and then this semipermeable membrane solution is applied to a semipermeable membrane support is widely employed. It is desired that adhesion between the semipermeable membrane and the semipermeable membrane support should be high.

The filtration membrane is modulated before use. Typical modules in a filtration membrane sheet are a spiral module and a flat module. A typical module in a ductal filtration membrane is a ductal/tubular module (refer to Non-patent Document 1). The spiral module has a structure that a flow channel material on a raw water supply side ("flow channel material on a raw water supply side" may be referred to as "raw water spacer" hereinafter), a filtration membrane and a flow channel material on a treated water permeation side ("flow channel material on a treated water permeation side" may be referred to as "permeated water spacer" hereinafter) are wound up together (refer to Patent Document 1). In the flat module, a filtration membrane is bonded or fixed to a frame material made of a resin such as polypropylene or acrylonitrile·butadiene·styrene copolymer synthetic resin (ABS resin). Thermal fusion or ultrasonic fusion processing is generally carried out to bond or fix the filtration membrane to the frame material.

As the semipermeable membrane support, in general, paper obtained by papermaking a pulp fiber or a nonwoven fabric formed from a polyester fiber or polypropylene fiber is used (refer to Patent Document 2 and Patent Document 3). A metal roll(s) and an elastic roll(s) having a temperature elevation mechanism are arbitrarily combined to carry out hot-press processing on a sheet produced by a wet papermaking method by controlling the temperature, pressure and roll hardness, thereby making it possible to change the performance such as strength and density of the semipermeable membrane support (refer to Patent Document 4).

A problem that water permeability calculated at the time of design is not obtained after modulation in the spiral module comprising a filtration membrane sheet has recently occurred.
WO 2005/009580 A2 describes a defect free semipermeable composite membrane said to have excellent integrity and high water permeability. Said composite membrane comprises an inside support layer to provide sufficient mechanical strength, an outside barrier layer to provide selective separation and a middle layer to provide both chemical and physical binding between the support and the barrier layers. Three different methods for making said defect free composite membrane are describes. These methods are utilized to produce coatings and defect free composite membranes, which are independent of chemical composition and physical structure of said support. According to the document, ultrasonic sonication is utilized to enhance mass transfer and to speed up the phase inversion process of a membrane casting solution, and to produce a composite membrane at a speed higher than those disclosed in the prior art. Said defect free composite membranes have broad applications, ranging from filtration of fruit juice, wine and milk to purification of drinking water, municipal and industrial wastewater.
JP S56 126407 A relates to the problem to economically recover and recycle an organic solvent by using a coagulating bath of high organic solvent concentration in continuously producing a semipermeable aromatic polysulfone membrane. As a solution to the problem, the document describes that a filming stock solution prepared by dissolving aromatic polysulfone into an organic solvent is coated to a thin layer of a constant thickness on a base material. The base material is guided into a coagulating bath, where the organic solvent in the thin layer is substituted with the water forming the bath and the aromatic polysulfone coagulates to form a film. Here, the bath consists of the water containing 5-50wt% said organic solvent. Thence, the resultant membrane is passed together with the base material through first and second rinsing baths. The organic solvent concentration in the bath increases gradually; therefore, in order to maintain this in the above-described range, the water is supplied into the bath with a water feeder connecting to a concentration measuring device. The excess liquid of the bath is discharged.
JP 2015 058411 A relates to the problem to provide a semipermeable membrane support having less generation of membrane defects and less fuzz. As a solution to the problem, the document describes a semipermeable membrane support formed by laminating nonwoven fabric formed into one layer in a wet type sheet making step so as to become two or more layers by hot pressing processing, and having a pinhole size detected by transmitted beam of 10 pixel numbers or less. An average fiber diameter of a main fiber is 7-12 um and speed in the wet type sheet making step is 30 m/min or less, preferably.

### PRIOR ART DOCUMENTS

### Patent Documents

Patent Document 1: JP-A 2001-252543
Patent Document 2: JP-A S56-152705
Patent Document 3: JP-A 2002-95937
Patent Document 4: JP-A 2004-100047

### Non-patent Document

Non-patent Document 1: second edition of "Guideline for Introduction of Membrane Treating Technology into Sewage System" edited by Sewage Membrane Treating Technology Council, [online], March 2011, {retrieved on January 6, 2016}, internet <URL:http://www.mlit.go.jp/common/000146906.pdf>

When the inventors investigated the reason that water permeability calculated at the time of design is not obtained after modulation in the semipermeable membrane support used in the spiral module, they found that adhesion between the raw water spacer and the semipermeable membrane is low.

### SUMMARY OF THE INVENTION

### PROBLEM TO BE SOLVED BY THE INVENTION

It is an object of the present invention to provide a semipermeable membrane support which is excellent in adhesion to a semipermeable membrane and adhesion between a raw water spacer and a semipermeable membrane and thereby can be expected to maintain high water permeability after modulation.

It is another object of the present invention to provide an industrially advantageous method of producing the above semipermeable membrane support of the present invention.

Other objects and advantages of the present invention will become apparent from the following description.

### MEANS FOR SOLVING THE PROBLEM

As a result of intensive studies in order to solve the above problem, the inventors of the present invention made the present invention, which provides the semipermeable membrane support defined in claim 1 and the method of producing a semipermeable membrane support defined in claim 3. Preferred embodiments of the invention are defined in the dependent claims.

### EFFECT OF THE INVENTION

Since the semipermeable membrane support of the present invention is excellent in adhesion to a semipermeable membrane and adhesion between the raw water spacer and the semipermeable membrane, it can be expected to maintain high water permeability after modulation. With the method of producing a semipermeable membrane support of the present invention, a semipermeable membrane support having excellent adhesion to a semipermeable membrane can be produced.

### BRIEF DESCRIPTION OF THE DRAWINGS

[Fig. 1] This is a schematic diagram showing the combination, arrangement and sheet passing state of rolls used for hot-press processing in the present invention.
[Fig. 2] This is a schematic diagram showing the combination, arrangement and sheet passing state of rolls used for hot-press processing in the present invention.

### BEST MODE FOR CARRYING OUT THE INVENTION

The semipermeable membrane support of the present invention is formed of a wet nonwoven fabric containing at least a main synthetic fiber and a binder synthetic fiber. The semipermeable membrane support of the present invention is a semipermeable membrane support having a semipermeable membrane on one side and characterized in that the thickness difference between measurement thickness at 0.80 N/cm² and measurement thickness at 1.27 N/cm² of the semipermeable membrane support is 1.0 to 5.0 % based on the measurement thickness at 0.80 N/cm².

More preferably, the thickness difference between measurement thickness at 0.80 N/cm² and measurement thickness at 1.27 N/cm² of the semipermeable membrane support is 1.4 to 3.0 % based on the measurement thickness at 0.80 N/cm².

In this text, the "measurement thickness at 0.80 N/cm²" may be referred to as "measurement thickness (0.80)". The measurement thickness at 1.27 N/cm²" may be referred to as "measurement thickness (1.27)". The "difference between measurement thickness at 0.8 N/cm² and measurement thickness at 1.27 N/cm²" may be referred to as "difference in measurement thickness". The "difference in measurement thickness" is "{measurement thickness (0.80) - measurement thickness (1.27)}/measurement thickness (0.80) x 100" and the unit is "%".

As a result of studies on the present invention, when the difference in measurement thickness is 5.0 % or less, the raw water spacer and the semipermeable membrane are properly brought into contact with each other and closely adhered to each other at the time of forming the spiral module to be used, and favorable turbulence is generated on the surface of the semipermeable membrane, thereby making it possible to maintain high water permeability. When the difference in measurement thickness is 5.0 % or more, a space is formed at the interface between the raw material spacer and the semipermeable membrane by pressure which is applied to the semiconductor membrane support at the time of using the spiral module, whereby favorable turbulence is not generated, thereby reducing water permeability. When the difference in measurement thickness is 1.0 % more, the raw water spacer and the permeated water spacer can be closely adhered to the semipermeable membrane and the semipermeable membrane support at the time of fabricating the spiral module, thereby making it possible to maintain high water permeability. When the difference in measurement thickness is 1.0 % or less, adhesion between the raw material spacer or the permeated water spacer and the filtration membrane drops at the time of fabricating the spiral module, and a space tends to be formed, thereby reducing water permeability.

In the present invention, the difference in measurement thickness is more preferably 3.0 % or less. When the difference in measurement thickness is 3.0 % or less, if pressure is applied to the semipermeable membrane support at the time of forming the spiral module to be used, a space is hardly formed at the interface between the raw water spacer and the semipermeable membrane, and more favorable turbulence is generated, thereby making it possible to maintain higher water permeability. The difference in measurement thickness is more preferably 1.4 % or more. When the difference in measurement thickness is 1.4 % or more, the raw water spacer and the permeated water spacer can be more closely adhered to the semipermeable membrane and the semipermeable membrane support at the time of fabricating the spiral module, thereby making it possible to maintain higher water permeability.

The semipermeable membrane support of the present invention comprises a main fiber and a binder fiber as defined in claim 1. The main fiber is a fiber which form the skeleton of the semipermeable membrane support. A synthetic fiber is mainly used as the main fiber. More specifically, the synthetic fiber is selected from polyolefin-based, polyamide-based, polyacrylic, vinylon-based, vinylidene-based, polyvinyl chloride-based, polyester-based, benzoate-based, polychlal-based and phenol-based fibers. Although it is not particularly limited, a polyester-based fiber having high heat resistance is preferred and a polyethylene terephthalate (PET)-based fiber is more preferred. A semisynthetic fiber such as acetate, triacetate or promix and a regenerated fiber such as rayon, cupra or lyocell fiber may be used in combination.

The binder fiber is selected from composite fibers such as core-shell type fibers, side-by-side type fibers and radially split-type fibers and undrawn fibers. Since a coating film is hardly formed on the composite fiber, the composite fiber can improve mechanical strength while keeping a space in the semipermeable membrane support. Examples of the composite fibers include a combination of polypropylene (core) and polyethylene (shell) fibers, a combination of polypropylene (core) and ethylene vinyl alcohol (shell) fibers, a combination of high-melting point polyester (core) and low-melting point polyester (shell) fibers and polyester undrawn fibers. A single fiber (totally molten type) composed of only a low-melting point resin such as polyethylene or polypropylene and a hot water-soluble binder resin such as polyvinyl alcohol-based fiber may be used as long as their characteristic properties are not impaired though a coating film is easily formed in the step of drying the semipermeable membrane support. In the present invention, a combination of high-melting point polyester (core) and low-melting point polyester (shell) fibers and polyester undrawn fibers are preferred and PET-based undrawn fibers are more preferred.

The semipermeable membrane support of the present invention may comprise two or more different fibers having different fiber diameters as the main fibers. By optionally using two or more different main fibers having different fiber diameters, a change can be given to the fiber network, thereby making it possible to adjust the difference in measurement thickness, the measurement thickness (0.80) and the measurement thickness (1.27).

Regarding the fiber diameter and fiber length of each of the fibers used in the semipermeable membrane support of the present invention, the fiber diameter is 5 to 20 µm from the viewpoints of the strength and manufacturability of the nonwoven fabric. The fiber length is 3 to 10 mm. Although the sectional shape of the fiber is preferably circular, a fiber having a modified section such as T type, Y type or triangular section may be contained as long as other characteristic properties such as fiber dispersibility are not impaired for strike-through prevention and surface smoothness. A splitable composite fiber may be made fine by hydroentanglement or a refiner before use.

The air permeability of the semipermeable membrane support of the present invention is 0.5 to 25.0 cc/cm²·sec, preferably 1.0 to 20.0 cc/cm²·sec, more preferably 1.5 to 16.0 cc/cm²·sec, particularly preferably 2.0 to 15.0 cc/cm²·sec. Within this range, adhesion between the semipermeable membrane and the semipermeable membrane support becomes high, and when the semipermeable membrane solution is applied, strike-through hardly occurs and the smoothness of the coating surface tends to become high.

The semipermeable membrane support of the present invention may be a multi-layer nonwoven fabric having two or more layers. The two or more layers may be the same or different in composition.

In the method of producing a semipermeable membrane support of the present invention, hot-press processing is carried out on a sheet produced by a wet papermaking method.

In the method of producing a semipermeable membrane support by carrying out hot-press processing on a sheet produced by a wet papermaking method in the present invention, hot-press processing is carried out by using a hot-press processing apparatus having a combination of a metal roll(s) and an elastic roll(s). The elastic roll has a type A durometer hardness of 60 or more and a type D durometer hardness of 95 or less, the nip pressure is 30 to 250 kN/m, and the processing speed is 20 to 100 m/min, thereby making it possible to produce a semipermeable membrane support having high adhesion to a semipermeable membrane.

In the present invention, it is possible to set the difference in measurement thickness to a range of 1.0 to 5.0 % by adjusting the papermaking conditions and drying conditions of wet paper in the wet papermaking method and hot-press processing conditions though the amount of each blending component other than fibers is not known.

In the wet papermaking method, the fibers are first dispersed in water uniformly and then a slurry having a final fiber concentration of 0.01 to 0.50 mass% is prepared with a papermaking machine through a screening step (removal of foreign matters and lumps) to obtain wet paper. To disperse the fibers uniformly, chemicals such as a dispersant, defoaming agent, hydrophilic agent, antistatic agent, polymer thickener, release agent, antibacterial agent and disinfectant may be added during the process.

As the papermaking machine, for example, a papermaking machine comprising a single papermaking screen such as Fourdrinier, cylinder or inclined wire or a combination papermaking machine comprising two or more papermaking screens of the same type or different types installed online may be used. When the semipermeable membrane support of the present invention is a multi-layer nonwoven fabric, as the method of producing it, "combination method" in which wet paper sheets made by papermaking machines are laminated together and "casting method" in which a slurry containing fibers dispersed therein is cast on one pre-formed layer to form another layer may be employed. In the casing method, the one pre-formed layer may be in a wet or dry paper state. Two or more dry layers may be thermally fused together to produce a multi-layer nonwoven fabric.

To obtain wet paper by a papermaking machine, the difference in measurement thickness can be adjusted by controlling the papermaking speed or the fiber concentration even though the blending of fibers is the same. For example, when the papermaking speed is increased, the difference in measurement thickness tends to become relatively small. When the fiber concentration of the slurry is reduced, the difference in measurement thickness tends to become relatively large. By combining these and using another technique, the difference in measurement thickness can be adjusted to a range of 1.0 to 5.0 %. Although the other technique is not particularly limited, it may be the control of the injection speed of the slurry or the vibration direction, vibration velocity or amplitude of the papermaking screen.

A sheet is obtained by drying the wet paper produced by the papermaking machine with a Yankee drier, air drier, cylinder drier, suction drum drier or infrared drier. When the wet paper is dried, the smoothness of the adhered surface is improved by adhering the wet paper into close contact with a heating roll such as a Yankee drier for hot-press drying. Hot-press drying is to dry the wet paper by pressing it against the heating roll with a touch roll.

The surface temperature of the heating roll for hot-press drying is 100 to 180°C, preferably 100 to 160°C, more preferably 110 to 160°C. When the surface temperature of the heating roll is lower than 100°C, moisture in the wet paper produced by the papermaking machine is not fully evaporated, whereby the thickness evenness of the sheet may deteriorate and the difference in measurement thickness may become larger than 5.0 %. When the surface temperature of the heating roll is higher than 180°C, the wet paper produced by the papermaking machine sticks to the heating roll, whereby the texture of the sheet may become worse and the difference in measurement thickness may become smaller than 1.0 %. The pressure is 5 to 100 kN/m, preferably 10 to 80 kN/m. When the pressure is lower than 5 kN/m, moisture in the wet paper produced by the papermaking machine is not fully removed, whereby the thickness evenness of the sheet may deteriorate and the difference in measurement thickness may become larger than 5.0 %. When the pressure is higher than 100 kN/m, the wet paper produced by the papermaking machine sticks to the heating roll, whereby the texture of the sheet may become worse and the difference in measurement thickness may become smaller than 1.0 %.

In the method of producing a semipermeable membrane support of the present invention, hot-press processing is carried out on the sheet produced by the wet papermaking method by passing it while nipping it between the rolls of the hot-press processing apparatus. As a combination of rolls, a combination of two metal rolls, a combination of a metal roll and a resin roll or a combination of a metal roll and a cotton roll is used. One or both rolls are heated. Further, the number of times of passing through the nip may be two or more by reversing the front side and the rear side of the sheet as required. The "resin roll" and "cotton roll" may be generically referred to as "elastic roll" hereinafter. A combination of a metal roll and an elastic roll is particularly preferred.

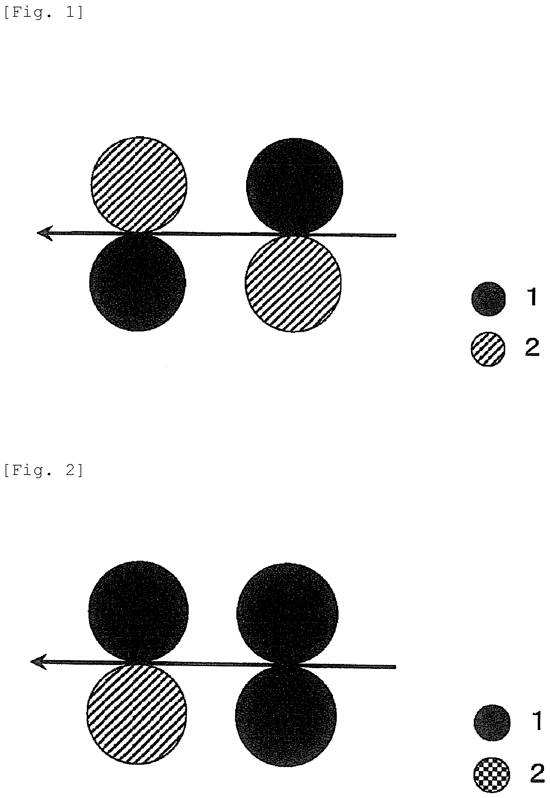

Fig. 1 and Fig. 2 are schematic diagrams showing the combination, arrangement and sheet passing state of rolls used for hot-press processing in the present invention. Fig. 1 and Fig. 2 show examples and the present invention is not limited to these. In Fig. 1 and Fig. 2, reference numeral 1 denotes a metal roll and reference numeral 2 denotes an elastic roll. Although both of the metal roll and the elastic roll may be used as heating rolls, the metal roll and the elastic roll are preferably used as heating rolls. More preferably, the metal roll is used as a heating roll. Fig. 1 shows a hot-press processing apparatus in which a first roll nip consisting of one metal roll 1 and one elastic roll 2 and a second roll nip consisting of one metal roll 1 and one elastic roll 2 are installed continuously. Fig. 2 shows a hot-press processing apparatus in which a first roll nip consisting of two metal rolls 1 and a second roll nip consisting of one metal roll 1 and one elastic roll 2 are installed continuously.

The surface temperature of the rolls used for hot-press processing is -60 to +10°C, preferably -40 to ±0°C from the meting point or softening point of the fiber measured by differential scanning calorimetry (DSC). When the surface temperature of the roll is reduced by more than 60°C from the melting point or softening point of the fiber contained in the sheet, fluffing may readily occur, thereby making it difficult to obtain a semipermeable membrane having uniform thickness. When the surface temperature of the roll is increased by more than 10°C, a fiber molten matter adheres to the metal roll, whereby the semipermeable membrane support may become nonuniform, thereby making it difficult to obtain a semipermeable membrane having uniform thickness, and also the content of the molten matter in the semipermeable membrane support becomes too high, thereby reducing cushion properties and the difference in measurement thickness to smaller than 1.0 %.

The nip pressure for hot-press processing is 30 to 250 kN/m, preferably 40 to 200 kN/m. When the nip pressure is lower than 30 kN/m, sufficient pressure is not applied, whereby the surface smoothness of the semipermeable membrane support deteriorates and coating irregularity and a defect are readily produced at the time of forming the semipermeable membrane. When the nip pressure is higher than 250 kN/m, the pressure is too high, whereby the sheet may crease. Further, the surface smoothness of the semipermeable membrane support becomes too high, whereby the adhesion of the semipermeable membrane may deteriorate at the time of forming the semipermeable membrane.

The processing speed of hot-press processing is 20 to 100 m/min, preferably 30 to 60 m/min. When the processing speed is lower than 20 m/min, though the reason is unknown, thickness or air permeability increases, whereby the difference in measurement thickness may become larger than 5.0 %. Probably, it is assumed that the binder synthetic fiber is deactivated due to an increase in remaining heat time before nipping. When the processing speed is higher than 100 m/min, the sheet readily sticks to the heating roll in the vicinity of the outlet of the nip, thereby making stable operation difficult.

The radii of the two rolls constituting the roll nip may be the same or different. The roll radius is preferably 50 to 2,000 mm, more preferably 100 to 1,500 mm. When the roll radius is smaller than 50 mm, it is difficult to obtain desired thickness and when the roll radius is larger than 2,000 mm, it is difficult to control the surface temperature.

In a combination of the metal roll and the elastic roll, although the materials of the elastic roll and the metal roll are not particularly limited, these rolls have a preferred range of hardness. The type A durometer hardness of the elastic roll is 60 or more, more preferably 70 or more. The type D durometer hardness of the elastic roll is 95 or less and the type A durometer hardness of the elastic roll is more preferably 80 to less. Although the hardness of the metal roll is not particularly limited, a metal roll having a Shore hardness measured by a method specified in JIS Z2246:2000 of HS60 to HS95 and a tungsten carbide sprayed coating is preferred.

When the type A durometer hardness of the elastic roll is less than 60, the surface of the elastic roll deforms, thereby making it difficult to obtain desired thickness, and the difference in measurement thickness may become larger than 5.0 %. When the type D durometer hardness of the elastic roll is more than 95, the surface of the elastic roll readily cracks at the time of nipping with the metal roll, and the elastic roll must be exchanged frequently, whereby stable operation may become difficult. Since the surface of a metal roll having a Shore hardness of more than HS95 is too hard, the sheet may crease. With a metal roll having a Shore hardness of less than HS60, distortion may readily occur at the time of nipping, whereby the sheet may crease or the uniformity of the semipermeable membrane support may deteriorate.

The durometer hardness is measured in accordance with a durometer hardness test by a method specified in JIS K6253-3:2012. The surface hardness of the elastic roll after assembly is measured with a type A durometer or type D durometer. The apparent hardness is read within 1/sec after the pressing surface of the durometer adheres to the surface of the elastic roll to take the center value of 5-point measurement data as "durometer hardness of elastic roll".

When the semipermeable membrane support of the present invention is a multi-layer nonwoven fabric and the multi-layer nonwoven fabric is produced by a wet papermaking method, the fiber concentration of the slurry can be lowered due to a reduction in the weight of each layer, whereby the texture of the sheet becomes better with the result that the smoothness and uniformity of the coating surface improve. Even when the texture of each layer is not uniform, the nonuniformity can be compensated by lamination. Further, the papermaking speed can be raised, thereby improving operability.

The weight of each semipermeable membrane support is preferably 20 to 150 g/m², more preferably 30 to 110 g/m², much more preferably 40 to 90 g/m². When the weight is lower than 20 g/m², sufficient tensile strength is not obtained and the semipermeable membrane solution strikes out, whereby the adhesion of the semipermeable membrane may become low. When the weight is higher than 150 g/m², drying load becomes large in the production process, whereby production stability tends to deteriorate.

The semipermeable membrane support of the present invention may be a multi-layer nonwoven fabric obtained by laminating together two or more nonwoven fabrics by using the same method as hot-press processing. The weights of the nonwoven fabrics may be the same or different. In this case, a semipermeable membrane support having a weight of 20 to 300 g/m² can be obtained while suppressing drying load in the production process. When the weight is higher than 300 g/m², load in the lamination step becomes large, whereby production stability tends to deteriorate.

The thickness of the semipermeable membrane support is preferably 40 to 300 pm, more preferably 60 to 200 pm, much more preferably 80 to 150 µm. When the thickness of the semipermeable membrane support is larger than 300 pm, the area of the filtration membrane which can be incorporated into a unit may become small or the number of the filtration membranes which can be incorporated into a unit may become small with the result that the life of the filtration membrane may become short. When the thickness is smaller than 40 pm, sufficient tensile strength may not be obtained, or the life of the filtration membrane may become short due to low liquid permeability.

### EXAMPLES

The following examples are given to further illustrate the present invention.

### (Example 1)

### <fabrication of sheet>

70 mass% of a drawn polyester-based fiber having a fiber diameter of 7.7 µm and a fiber length of 5 mm as the main fiber and 30 mass% of an undrawn polyester-based binder fiber having a fiber diameter of 10.9 pm, a fiber length of 5 mm and a melting point of 260°C as the binder fiber were dissociated in pulper water to be dispersed and stirred so as to prepare a homogeneous papermaking slurry. After combined wet paper having two layers with an each dry weight of 37.5 g/m² was made from this papermaking slurry at a making speed of 60 m/min by using a combination machine having an inclined wire and a cylinder wire, the coating surface was brought into contact with a Yankee drier having a surface temperature of 130°C to hot-press dry the wet paper at a touch roll pressure of 100 kN/m so as to obtain a sheet having a combined weight of 75 g/m².

### <hot-press processing>

Hot-press processing was carried out on the obtained sheet by using a hot-press processing apparatus in which a first roll nip consisting of one metal roll (radius of 450 mm) and one elastic roll and a second roll nip consisting of one metal roll (radius of 450 mm) and one elastic roll are installed continuously as shown in Fig. 1 so as to obtain a semipermeable membrane support. The hot-press processing conditions are shown in Table 1.

### (Example 2)

### <fabrication of sheet>

A sheet having a combined weight of 80 g/m² was obtained in the same manner as in the <fabrication of sheet> of Example 1 except that the amount of the main fiber was changed to 80 mass%, the amount of the binder fiber was changed to 20 mass%, the dry mass of each layer was changed to 40 g/m², the making speed was changed to 45 m/min, and the pressure of the touch roll was changed to 5 kN/m.

### <hot-press processing>

Hot-press processing was carried out on the obtained sheet in the same manner as in the <hot-press processing> of Example 1 except that the hot-press processing conditions were changed as shown in Table 1 so as to obtain a semipermeable membrane support.

### (Example 3)

### <fabrication of sheet>

A sheet having a combined weight of 80 g/m² was obtained in the same manner as in the <fabrication of sheet> of Example 2 except that 20 mass% of a drawn polyester-based fiber having a fiber diameter of 7.9 µm and a fiber length of 5 mm, 30 mass% of a drawn polyester-based fiber having a fiber diameter of 12.1 µm and a fiber length of 5 mm and 20 mass% of a drawn polyester-based fiber having a fiber diameter of 17.5 µm and a fiber length of 5 mm were used as the main fibers, 30 mass% of an undrawn polyester-based binder fiber having a fiber diameter of 10.5 pm, a fiber length of 5 mm and a melting point of 260°C was used as the binder fibers, the making speed was changed to 50 m/min, and the pressure of the touch roll was changed to 80 kN/m.

### <hot-press processing>

Hot-press processing was carried out on the obtained sheet by using a hot-press processing apparatus in which a first roll nip consisting of two metal rolls (radius of 450 mm) and a second roll nip consisting of one metal roll (radius of 450 mm) and one elastic roll are installed continuously as shown in Fig. 2 so as to obtain a semipermeable membrane support. The hot-press processing conditions are shown in Table 1.

### (Example 4)

### <fabrication of sheet>

A sheet was obtained in the same manner as in the <fabrication of sheet> of Example 2 except that the amount of the main fiber was changed to 75 mass%, the amount of the binder fiber was changed to 25 mass%, the pressure of the touch roll was changed to 10 kN/m, the dry mass of each layer was changed to 37.5 g/m², and the combined weight was changed to 75 g/m²

### <hot-press processing>

Hot-press processing was carried out on the obtained sheet in the same manner as in the <hot-press processing> of Example 2 so as to obtain a semipermeable membrane support.

### (Example 5)

### <fabrication of sheet>

A sheet having a combined weight of 75 g/m² was obtained in the same manner as in the <fabrication of sheet> of Example 4 except that the making speed was changed to 50 m/min and the pressure of the touch roll was changed to 30 kN/m.

### <fabrication of sheet>

Hot-press processing was carried out on the obtained sheet in the same manner as in the <hot-press processing> of Example 4 except that the hot-press processing conditions were changed as shown in Table 1 so as to obtain a semipermeable membrane support.

### (Examples 6 to 8)

Hot-press processing was carried out on the sheet obtained in the same manner as in the <fabrication of sheet> of Example 1 except that the hot-press processing conditions were changed as shown in Table 1 so as to obtain semipermeable membrane supports.

### (Comparative Example 1)

A sheet having a combined weight of 90 g/m² was obtained in the same manner as in the <fabrication of sheet> of Example 3 except that 20 mass% of a drawn polyester-based fiber having a fiber diameter of 7.9 µm and a fiber length of 5 mm, 30 mass% of a drawn polyester-based fiber having a fiber diameter of 12.1 µm and a fiber length of 5 mm and 10 mass% of a drawn polyester-based fiber having a fiber diameter of 17.5 µm and a fiber length of 5 mm were used as the main fibers, 40 mass% of an undrawn polyester-based binder fiber having a fiber diameter of 10.5 pm, a fiber length of 5 mm and a melting point of 260°C was used as the binder fiber, the pressure of the touch roll was changed to 110 kN/m and the dry mass of each layer was changed to 45 g/m².

### <hot-press processing>

Hot-press processing was carried out on the obtained sheet in the same manner as in the "<hot-press processing" of Example 3 except that the hot-press processing conditions were changed as shown in Table 1 so as to obtain a semipermeable membrane support.

### (Comparative Example 2)

### <fabrication of sheet>

A sheet having a combined weight of 60 g/m² was obtained in the same manner as in the <fabrication of sheet> of Example 2 except the pressure of the touch roll was changed to 4 kN/m and the dry mass of each layer was changed to 30 g/m².

### <hot-press processing>

Hot-press processing was carried out on the obtained sheet in the same manner as in the <hot-press processing> of Example 2 except that the hot-press processing conditions were changed as shown in Table 1 so as to obtain a semipermeable membrane support.

### (Comparative Example 3)

### <fabrication of sheet>

A sheet having a combined weight of 100 g/m² was obtained in the same manner as in the <fabrication of sheet> of Example 1 except that 35 mass% of a drawn polyester-based fiber having a fiber diameter of 17.5 µm and a fiber length of 5 mm was used as the main fiber, 65 mass% of an undrawn polyester-based binder fiber having a fiber diameter of 10.5 pm, a fiber length of 5 mm and a melting point of 256°C was used as the binder fiber, the making speed was changed to 30 m/min and the dry mass of each layer was changed to 50.0 g/m².

### <hot-press processing>

Hot-press processing was carried out on the obtained sheet in the same manner as in the <hot-press processing> of Example 1 except that the hot-press processing conditions were changed as shown in Table 1 so as to obtain a semipermeable membrane support.

### (Comparative Example 4)

### <fabrication of sheet>

A sheet having a combined weight of 100 g/m² was obtained in the same manner as in the <fabrication of sheet> of Comparative Example 3 except that the amount of the main fiber was changed to 50 mass% and the amount of the binder fiber was changed to 50 mass%.

### <hot-press processing>

Hot-press processing was carried out on the obtained sheet in the same manner as in the <hot-press processing> of Example 1 except that the hot-press processing conditions were changed as shown in Table 1 so as to obtain a semipermeable membrane support.

### (Comparative Example 5)

### <fabrication of sheet>

A sheet having a combined weight of 100 g/m² was obtained in the same manner as in the <fabrication of sheet> of Comparative Example 3 except that the amount of the main fiber was changed to 65 mass% and the amount of the binder fiber was changed to 35 mass%.

### <hot-press processing>

Hot-press processing was carried out on the obtained sheet in the same manner as in the <hot-press processing> of Example 1 except that the hot-press processing conditions were changed as shown in Table 1 so as to obtain a semipermeable membrane support.

### (Comparative Examples 6 and 7)

Hot-press processing was carried out on the sheet obtained in the <fabrication of sheet> of Example 1 in the same manner as in the <hot-press processing> of Example 1 except that the hot-press processing conditions were changed as shown in Table 1 so as to obtain semipermeable membrane supports.

The above Comparative Examples 3 to 5 are based on Examples 4 to 6 disclosed by the Prior Art Document 4 (JP-A 2004-100047), respectively.

The following measurements and evaluations were made on the semipermeable membrane supports obtained in Examples and Comparative Examples, and the results are shown in Table 1.

### measurement 1 (measurement thickness (1.27))

The thickness was measured at a measurement pressure of 1.27 N/cm² by using a precision thickness meter (manufactured by Swiss Instruments, trade name: Tesa Micro-Hite100). The preparation and measurement position of a test sample and the number of measurements were based on JIS P8118:2014, and the average value of measurement data which was calculated as 3 significant digits by a method specified in JIS Z8401:1999 was taken as measurement thickness (1.27).

### measurement 2 (measurement thickness (0.80))

The thickness was measured in the same manner as in the measurement 1 except that the measurement pressure was changed to 0.80 N/cm² and taken as measurement thickness (0.80).

### measurement 3 (weight)

The weight was measured based on JIS P8124:2011.

### measurement 4 (air permeability)

This was measured by a method specified in JIS L1096:2010 using an air permeability testing machine (manufactured by Kato Tech Co., Ltd., trade name: KES-F8-AP1).

### evaluation 1 (adhesion)

A DMF solution (concentration of 21 mass%) of a polysulfone resin (manufactured by SOLVAY, trade name: Udel (registered trademark) P-3500 LCD MB3, molecular weight of 78,000 to 84,000 g/mol (catalog value)) was applied to the coating surface of a semipermeable membrane support by using a comma coater having a certain clearance, rinsed in water and dried to form a polysulfone film on the surface of the semipermeable membrane support.

After an aqueous solution containing 2.0 mass% of m-phenylenediamine and 0.15 mass% of sodium lauryl sulfate was applied to the obtained polysulfone film so as to be brought into contact with the polysulfone film for several seconds, an excess of the aqueous solution was removed to form a coating layer of the aqueous solution on the polysulfone film.

After a hexane solution containing 0.10 mass% of trimesoyl chloride and 2 mass% of acetone was applied to the obtained coating layer so as to be brought into contact with the coating layer for several seconds, the hexane solution was removed, and then the coating layer was kept in air for 10 minutes to form a polyamide layer on the polysulfone film so as to obtain a semipermeable membrane.

A raw water spacer having a thickness of 0.71 mm was set on the obtained semipermeable membrane to evaluate the pressure dependency of a permeation flux.
⊚ (very good): Extremely high level that the permeation flux shows a constant growth rate as pressure increases and depletion caused by a pressure increase is not seen. Adhesion to the raw water spacer is excellent.
∘ (good): Level high enough for practical use that the permeation flux shows a constant growth rate at low to medium pressures though the permeation flux growth rate drops at a high pressure and depletion caused by a pressure increase is seen. Adhesion to the raw water spacer drops at a high pressure.
Δ (satisfactory): The permeation flux growth rate drops at low to high pressures and large depletion caused by a pressure increase is seen. Practically usable level. Adhesion to the raw water spacer is low.
X (unsatisfactory): The permeation flux growth rate significantly drops at low to high pressures and extremely large depletion caused by a pressure increase is seen. Practical use limit level. Adhesion to the raw water spacer is low.

### Evaluation 2 (adhesion of polysulfone film)

The polysulfone film fabricated in the evaluation 1 was slowly peeled off from the semipermeable membrane support at the interface between them one day after fabrication to judge adhesion by the degree of resistance at the time of peeling.
⊚ (excellent): Adhesion between the polysulfone film and the semipermeable membrane support is such high that they cannot be separated from each other. Extremely high level.
∘ (very good): Adhesion between the polysulfone film and the semipermeable membrane support is such high that great force is required to peel off the polysulfone film. High level.
∘Δ (good): There exists a part where the polysulfone film easily peels off. Level without a problem for practical use.
Δ (satisfactory): The polysulfone film and the semipermeable membrane support adhere to each other but as a whole easily separate from each other. Lower limit level for practical use.
X (unsatisfactory): The polysulfone film peels off or the semipermeable membrane support is broken in the rinsing or drying step after the coating of the polysulfone film. Unusable level.

**[Table 1]**

| | First roll nip | | | | Second roll nip | | | | HPS m/min |
|---|---|---|---|---|---|---|---|---|---|
| | Elastic roll | Metal roll | | Nip pressure | Elastic roll | Metal roll | | Nip pressure | |
| | Durometer hardness | Shore hardness | Temp. | | Durometer hardness | Shore hardness | Temp. | | |
| | | HS | °C | kN/m | | HS | °C | kN/m | |
| Ex. 1 | Type D 91 | 75 | 235 | 100 | Type D 91 | 75 | 240 | 100 | 60 |
| Ex. 2 | Type D 91 | 75 | 235 | 90 | Type D 91 | 75 | 240 | 90 | 45 |
| Ex. 3 | - | 75 | 220 | 80 | Type D 91 | 75 | 150 | 100 | 50 |
| Ex. 4 | Type D 91 | 75 | 235 | 90 | Type D 91 | 75 | 240 | 90 | 45 |
| Ex. 5 | Type D 91 | 75 | 235 | 100 | Type D 91 | 75 | 240 | 100 | 50 |
| Ex. 6 | Type A 74 | 75 | 220 | 40 | Type D 91 | 75 | 240 | 100 | 60 |
| Ex. 7 | Type A 74 | 75 | 220 | 40 | Type A 74 | 75 | 220 | 120 | 30 |
| Ex. 8 | Type A 74 | 75 | 235 | 40 | Type A 74 | 75 | 220 | 120 | 30 |
| C.Ex. 1 | - | 75 | 220 | 80 | Type D 91 | 75 | 150 | 100 | 60 |
| C.Ex. 2 | Type D 91 | 75 | 235 | 80 | Type D 91 | 75 | 240 | 80 | 30 |
| C.Ex. 3 | Type A 72 | 75 | 230 | 25 | Type A 72 | 75 | 230 | 25 | 5 |
| C.Ex. 4 | Type A 72 | 75 | 230 | 25 | Type A 72 | 75 | 230 | 25 | 5 |
| C.Ex. 5 | Type A 72 | 75 | 230 | 25 | Type A 72 | 75 | 230 | 25 | 5 |
| C.Ex. 6 | Type A 74 | 75 | 220 | 40 | Type A 74 | 75 | 235 | 120 | 30 |
| C.Ex. 7 | Type A 74 | 75 | 220 | 40 | Type A 74 | 75 | 235 | 120 | 10 |

| | | | | | | | | | |
|---|---|---|---|---|---|---|---|---|---|
| Ex.: Example, C.Ex.: Comparative Example, HPS: Hot-press processing speed, Temp.: Temperature | | | | | | | | | |

**[Table 1](continued)**

| | Measurement 1 | Measurement 2 | Difference in measurement thickness % | Measurement 3 | Density (weight/ measurement thickness (1.27)) g/cm³ | Measurement 4 | Ev. 1 | Ev. 2 |
|---|---|---|---|---|---|---|---|---|
| | Measurement thickness (1.27) µm | Measurement thickness (0.80) µm | | weight g/m2 | | Air permeability cc/cm²·sec | Adh. | Adh. of polysulfone film |
| Ex. 1 | 93.4 | 94.4 | 1.0 | 75 | 0.80 | 2.0 | Δ | ○Δ |
| Ex. 2 | 93.9 | 97.9 | 4.1 | 80 | 0.85 | 2.1 | ○ | ○Δ |
| Ex. 3 | 92.4 | 93.8 | 1.5 | 80 | 0.87 | 2.0 | ⊚ | ○Δ |
| Ex. 4 | 91.2 | 94.0 | 3.0 | 75 | 0.82 | 2.2 | ⊚ | ○Δ |
| Ex. 5 | 93.8 | 95.5 | 1.8 | 75 | 0.80 | 1.8 | ⊚ | Δ |
| Ex. 6 | 106.8 | 108.3 | 1.4 | 77 | 0.72 | 4.9 | ⊚ | ○ |
| Ex. 7 | 115.3 | 118.5 | 2.7 | 77 | 0.67 | 6.2 | ⊚ | ⊚ |
| Ex. 8 | 113.5 | 115.5 | 1.7 | 75 | 0.66 | 6.4 | ⊚ | ⊚ |
| C.Ex. 1 | 91.6 | 91.9 | 0.3 | 90 | 0.98 | 1.9 | X | X |
| C.Ex. 2 | 88.1 | 93.2 | 5.4 | 60 | 0.68 | 2.3 | X | ○Δ |
| C.Ex. 3 | 168.0 | 179.0 | 6.1 | 105 | 0.63 | 22 | X | Δ |
| C.Ex. 4 | 172.0 | 184.0 | 6.5 | 102 | 0.59 | 25 | X | Δ |
| C.Ex. 5 | 183.0 | 198.0 | 7.6 | 101 | 0.55 | 32 | X | × |
| C.Ex. 6 | 136.3 | 136.4 | 0.1 | 77 | 0.56 | 5.7 | X | ⊚ |
| C.Ex. 7 | 132.0 | 133.1 | 0.8 | 78 | 0.59 | 8.4 | X | ⊚ |

| | | | | | | | | |
|---|---|---|---|---|---|---|---|---|
| Ex.: Example, C.Ex.: Comparative Example, Adh.: Adhesion, Ev.: Evaluation | | | | | | | | |

The semipermeable membrane supports of Examples 1 to 8 have a difference in measurement thickness of 1.0 to 5.0 % and have achieved a level of excellent adhesion between the raw water spacer and the semipermeable membrane.

In contrast to these, the semipermeable membrane supports of Comparative Example 1 and Comparative Examples 6 and 7 have a difference in measurement thickness of less than 1.0 %, the semipermeable membrane supports of Comparative Examples 2 to 5 have a difference in measurement thickness of more than 5.0 %, and all of them have a practical use limit level as they have low adhesion between the raw water spacer and the semipermeable membrane.

The semipermeable membrane supports of Examples 3 to 8 having a difference in measurement thickness of 1.4 to 3.0 % achieve a level ensuring to have higher adhesion between the raw water spacer and the semipermeable membrane than the semipermeable membrane support of Example 1 having a difference in measurement thickness of less than 1.4 % and the semipermeable membrane support of Example 2 having a difference in measurement thickness of more than 3.0 %.

The semipermeable membrane supports of Examples 6 to 8 which were produced by the method of producing a semipermeable membrane support in which hot pressing is carried out by using a hot-press processing apparatus having a combination of a metal roll(s) and an elastic roll(s), the type A durometer hardness of the elastic roll is 60 to 80, the nip pressure is 30 to 250 kN/m and the processing speed is 20 to 100 m/min achieve a level ensuring to have higher adhesion to the polysulfone film than the semipermeable membrane supports of Examples 1 to 5.

### INDUSTRIAL FEASIBILITY

The semipermeable membrane support of the present invention can be used in the field of ultrapure water production for medical purposes typified by the desalination of sea water, water purifiers, food concentration, wastewater treatment and hemofiltration and for cleaning semiconductors.

### EXPLANATION OF REFERENCE NUMERALS

- 1: metal roll
- 2: elastic roll

## Claims

1. A semipermeable membrane support for forming a semipermeable membrane thereon, having a thickness difference between measurement thickness at 0.80 N/cm² and measurement thickness at 1.27 N/cm² of 1.0 to 5.0 % based on the measurement thickness at 0.80 N/cm², wherein
the semipermeable membrane support is formed of a nonwoven fabric produced by a wet papermaking method containing at least a main fiber and a binder synthetic fiber, each having a fiber diameter of 5 to 20 µm and a fiber length of 3 to 10 mm,
the main fiber is a synthetic fiber selected from polyolefin-based, polyamide-based, polyacrylic, vinylon-based, vinylidene-based, polyvinyl chloride-based, polyester-based, benzoate-based, polychlal-based and phenol-based fiber,
the binder fiber is selected from composite fibers such as core-shell type fibers, side-by-side type fibers and radially split-type fibers and undrawn fibers, and
the semipermeable membrane support has an air permeability of 0.5 to 25.0 cc/cm²·sec.

2. The semipermeable membrane support according to claim 1, wherein the thickness difference between measurement thickness at 0.80 N/cm² and measurement thickness at 1.27 N/cm² is 1.4 to 3.0 % based on the measurement thickness at 0.80 N/cm².

3. A method of producing a semipermeable membrane support by carrying out hot-press processing on a nonwoven fabric produced by a wet papermaking method, wherein
the nonwoven fabric contains at least a main fiber and a binder synthetic fiber, each having a fiber diameter of 5 to 20 µm and a fiber length of 3 to 10 mm,
the main fiber is a synthetic fiber selected from polyolefin-based, polyamide-based, polyacrylic, vinylon-based, vinylidene-based, polyvinyl chloride-based, polyester-based, benzoate-based, polychlal-based and phenol-based fiber, and
the binder fiber is selected from composite fibers such as core-shell type fibers, side-by-side type fibers and radially split-type fibers and undrawn fibers,
and a heating roll for hot-press drying in the wet papermaking method has a surface temperature of 100 to 180°C and a roll pressure of 5 to 100 kN/m,
the hot-press processing is carried out with a hot-press processing apparatus having a combination of a metal roll(s) and an elastic roll(s), which has (have) a hardness between a type A durometer hardness of 60 or more and a type D durometer hardness of 95 or less, at a nip pressure between the metal roll and the elastic roll of 30 to 250 kN/m and a processing speed of 20 to 100 m/min,
the metal roll for use in the hot-press processing has a surface temperature of -60 to +10°C from a melting point or softening point of a fiber measured by differential scanning calorimetry (DSC), and
the semipermeable membrane support has a thickness difference between measurement thickness at 0.80 N/cm² and measurement thickness at 1.27 N/cm² of 1.0 to 5.0 % based on the measurement thickness at 0.80 N/cm², and an air permeability of 0.5 to 25.0 cc/cm²·sec.

4. The method of producing a semipermeable membrane support according to claim 3, wherein an elastic roll having a type A durometer hardness of 60 to 80 is used as the elastic roll.

## Patentansprüche

1. Träger für eine halbdurchlässige Membran zur Bildung einer halbdurchlässigen Membran darauf, mit einer Dickendifferenz zwischen der Messdicke bei 0,80 N/cm² und der Messdicke bei 1,27 N/cm² von 1,0 bis 5,0 %, bezogen auf die Messdicke bei 0,80 N/cm², wobei
der Träger für eine halbdurchlässige Membran aus einem Vliesstoff gebildet ist, der durch ein Nasspapierherstellungsverfahren hergestellt wird und mindestens eine Hauptfaser und eine synthetische Bindefaser enthält, die jeweils einen Faserdurchmesser von 5 bis 20 µm und eine Faserlänge von 3 bis 10 mm aufweisen,
die Hauptfaser eine synthetische Faser ist, ausgewählt aus Fasern auf Polyolefinbasis, Polyamidbasis, Polyacrylbasis, Vinylonbasis, Vinylidenbasis, Polyvinylchloridbasis, Polyesterbasis, Benzoatbasis, Polychlalbasis und Phenolbasis,
die Bindefaser aus Verbundfasern wie Kern-Schale-Fasern, Seite-an-Seite-Fasern und radial gespaltenen Fasern und nicht verstreckten Fasern ausgewählt ist, und
der Träger für eine halbdurchlässige Membran eine Luftdurchlässigkeit von 0,5 bis 25,0 cc/cm²·sec aufweist.

2. Träger für eine halbdurchlässige Membran nach Anspruch 1, wobei der Dickenunterschied zwischen der Messdicke bei 0,80 N/cm² und der Messdicke bei 1,27 N/cm² 1,4 bis 3,0 % beträgt, bezogen auf die Messdicke bei 0,80 N/cm².

3. Verfahren zur Herstellung eines Trägers für eine halbdurchlässige Membran durch Ausführen einer Heißpressverarbeitung an einem Vliesstoff, der durch ein Nasspapierherstellungsverfahren hergestellt wurde, wobei
der Vliesstoff mindestens eine Hauptfaser und eine synthetische Bindefaser enthält, die jeweils einen Faserdurchmesser von 5 bis 20 µm und eine Faserlänge von 3 bis 10 mm aufweisen,
die Hauptfaser eine synthetische Faser ist, ausgewählt aus Fasern auf Polyolefin-, Polyamid-, Polyacryl-, Vinylon-, Vinyliden-, Polyvinylchlorid-, Polyester-, Benzoat-, Polychlal- und Phenolbasis, und
die Bindefaser aus Verbundfasern wie Kern-Schale-Fasern, Seite-an-Seite-Fasern und radial gespaltenen Fasern und nicht verstreckten Fasern ausgewählt ist,
und eine Heizwalze für die Heißpressentrocknung bei der Nasspapierherstellung eine Oberflächentemperatur von 100 bis 180 °C und einen Walzendruck von 5 bis 100 kN/m aufweist,
die Heißpressverarbeitung mit einer Heißpressverarbeitungsvorrichtung durchgeführt wird, die eine Kombination aus einer Metallwalze bzw. Metallwalzen und einer elastischen Walze bzw. elastischen Walzen aufweist, die eine Härte zwischen einer Durometerhärte vom Typ A von 60 oder mehr und einer Durometerhärte vom Typ D von 95 oder weniger aufweist bzw. aufweisen, bei einem Spaltdruck zwischen der Metallwalze und der elastischen Walze von 30 bis 250 kN/m und einer Verarbeitungsgeschwindigkeit von 20 bis 100 m/min,
die Metallwalze zur Verwendung bei der Heißpressverarbeitung eine Oberflächentemperatur von -60 bis +10 °C ab einem Schmelzpunkt oder Erweichungspunkt einer Faser, gemessen durch Differentialscanningkalorimetrie (DSC), aufweist, und
der Träger für eine halbdurchlässige Membran eine Dickendifferenz zwischen der Messdicke bei 0,80 N/cm² und der Messdicke bei 1,27 N/cm² von 1,0 bis 5,0 %, bezogen auf die Messdicke bei 0,80 N/cm², und eine Luftdurchlässigkeit von 0,5 bis 25,0 cc/cm²·sec aufweist.

4. Verfahren zur Herstellung eines Trägers für eine halbdurchlässige Membran nach Anspruch 3, wobei eine elastische Walze mit einer Durometerhärte vom Typ A von 60 bis 80 als elastische Walze verwendet wird.

## Revendications

1. Support de membrane semi-perméable pour former une membrane semi-perméable, présentant une différence d'épaisseur entre l'épaisseur mesurée à 0,80 N/cm² et l'épaisseur mesurée à 1,27 N/cm² de 1,0 à 5,0 % par rapport à l'épaisseur mesurée à 0,80 N/cm², dans lequel
le support de membrane semi-perméable est formé d'un tissu non tissé produit par une méthode de fabrication de papier humide contenant au moins une fibre principale et une fibre synthétique liante, chacune ayant un diamètre de fibre de 5 à 20 µm et une longueur de fibre de 3 à 10 mm,
la fibre principale est une fibre synthétique choisie parmi les fibres à base de polyoléfine, de polyamide, de polyacrylique, de vinylone, de vinylidène, de chlorure de polyvinyle, de polyester, de benzoate, de polychlal et de phénol,
la fibre liante est choisie parmi les fibres composites telles que les fibres de type noyau-coquille, les fibres de type côte à côte, les fibres de type fendu radialement et les fibres non étirées, et
le support de membrane semi-perméable a une perméabilité à l'air de 0,5 à 25,0 cc/cm²·sec.

2. Support de membrane semi-perméable selon la revendication 1, dans lequel la différence d'épaisseur entre l'épaisseur mesurée à 0,80 N/cm² et l'épaisseur mesurée à 1,27 N/cm² est de 1,4 à 3,0 % par rapport à l'épaisseur mesurée à 0,80 N/cm².

3. Procédé de fabrication d'un support de membrane semi-perméable par pressage à chaud d'un tissu non tissé produit par une méthode de fabrication de papier humide, dans lequel
le tissu non tissé contient au moins une fibre principale et une fibre synthétique liante, chacune ayant un diamètre de fibre de 5 à 20 µm et une longueur de fibre de 3 à 10 mm,
la fibre principale est une fibre synthétique choisie parmi les fibres à base de polyoléfine, de polyamide, de polyacrylique, de vinylone, de vinylidène, de chlorure de polyvinyle, de polyester, de benzoate, de polychlal et de phénol, et
la fibre liante est choisie parmi les fibres composites telles que les fibres de type noyau-coquille, les fibres de type côte à côte, les fibres de type fendu radialement et les fibres non étirées,
et un rouleau chauffant pour le séchage par pressage à chaud dans la méthode de fabrication du papier humide a une température de surface de 100 à 180 °C et une pression de rouleau de 5 à 100 kN/m,
le traitement par pressage à chaud est effectué avec un appareil de traitement par pressage à chaud comprenant une combinaison de rouleau(x) métallique(s) et de rouleau(x) élastique(s) ayant une dureté comprise entre une dureté duromètre de type A de 60 ou plus et une dureté duromètre de type D de 95 ou moins, à une pression de pincement entre le rouleau métallique et le rouleau élastique de 30 à 250 kN/m et à une vitesse de traitement de 20 à 100 m/min,
le rouleau métallique utilisé dans le traitement par pressage à chaud a une température de surface comprise entre -60 et +10 °C par rapport au point de fusion ou au point de ramollissement d'une fibre mesuré par calorimétrie à balayage différentiel (DSC), et
le support de membrane semi-perméable présente une différence d'épaisseur entre l'épaisseur mesurée à 0,80 N/cm² et l'épaisseur mesurée à 1,27 N/cm² de 1,0 à 5,0 % par rapport à l'épaisseur mesurée à 0,80 N/cm², et une perméabilité à l'air de 0,5 à 25,0 cc/cm²·sec.

4. Procédé de fabrication d'un support de membrane semi-perméable selon la revendication 3, dans lequel on utilise comme rouleau élastique un rouleau élastique ayant une dureté duromètre de type A comprise entre 60 et 80.
